**Europäisches Patentamt**

**European Patent Office**

**Office européen des brevets**

(19)

(11) **EP 0 944 197 A1**

(12) **EUROPEAN PATENT APPLICATION**
published in accordance with Art. 158(3) EPC

(43) Date of publication:
22.09.1999 Bulletin 1999/38

(51) Int. Cl.⁶: **H04J 11/00**, H04J 13/00

(21) Application number: 98914019.9

(86) International application number:
PCT/JP98/01710

(22) Date of filing: 15.04.1998

(87) International publication number:
WO 99/04524 (28.01.1999 Gazette 1999/04)

(84) Designated Contracting States:
DE FI FR GB

(30) Priority: 15.07.1997 WO PCT/JP97/02439

(71) Applicant:
MITSUBISHI DENKI KABUSHIKI KAISHA
Tokyo 100-8310 (JP)

(72) Inventor:
MATSUMOTO, Wataru,
Mitsubishi Denki K.K
Tokyo 100-8310 (JP)

(74) Representative:
Pfenning, Meinig & Partner
Mozartstrasse 17
80336 München (DE)

(54) **TRANSMITTER, RECEIVER, TRANSMITTING METHOD, AND RECEIVING METHOD**

(57) The digital communication apparatus of the present invention aims to increase the communication capacity, increase the amount of data transmission, improve in radio communication performance such as its resistance against fading and interference. By performing multicarrier modulation at DMT modulation unit 90, followed by spreading modulation at spreading modulation unit 14, the multicarrier modulation and the spread spectrum are combined to obtain merits from both. The performance is improved further by using discrete orthogonal wavelet inverse transformation in the multicarrier modulation in M-band wavelet inverse transformer 29.

## Fig.1

## Description

Technical Field

The present invention relates to a digital communication apparatus. Particularly, the invention relates to transmitter, receiver, transmitting method and receiving method of the digital communication apparatus using a multicarrier modulation method.

Background Arts

Related Art 1

Recently, as a digital communication technology, CDMA (Code Division Multiple Access) method using a spread spectrum is receiving much attention. An advantage of CDMA method is that it has a larger communication capacity than FDMA (Frequency Division Multiple Access) method or TDMA (Time Division Multiple Access) method. In addition, CDMA method is characterized for its resistance against disturbance and interference, and has a high performance in resistance against fading and multipath. CDMA is an abbreviation for "Code Division Multiple Access". The CDMA method is one of multiple access methods that assigns a specified code (PN (pseudorandom noise) code) to each channel, and each channel is spectrum spread by the code where a modulated wave having a same carrier frequency is assigned to the code, and at a receiving side a desired channel is identified by each code. To spread the spectrum, a frequency bandwidth widens against a code transmission rate. Due to this, CDMA method is also called SSMA (Spread Spectrum Multiple Access) method.

A technique related to the spread spectrum communication, for example, is mentioned in a document entitled "Spread Spectrum Communication System" written by Mitsuo Yokoyama, and published by Kagaku Gijutsu Shuppansha.

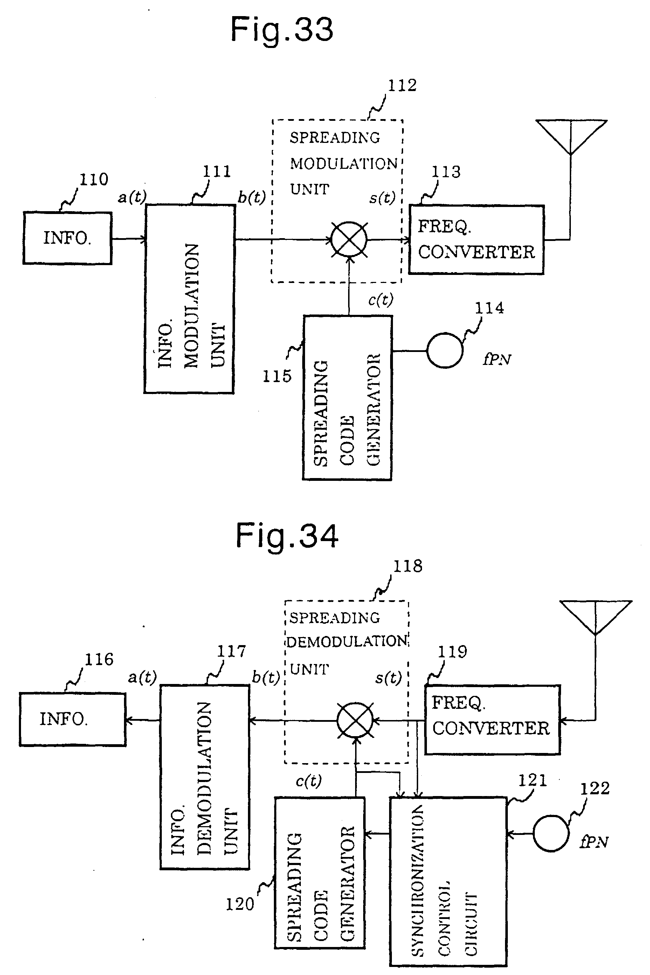

Figs.33 and 34 illustrate configurations of a transmitter and a receiver implementing a direct spread (DS) method, which is the method being used commonly in the spread spectrum communication.

Fig.33 is a block chart of the transmitter using the spread spectrum.

First, an information modulation unit 111 modulates a digital information a(t) by using the $\pi/4$ shift QPSK (Quadrature Phase Shift Keying) method. To an information modulated wave b(t), a spreading code c(t) is generated at an oscillator 114 and a spreading code generator 115 based an a PN code. Next, the information modulated wave b(t) is multiplied by the spreading code c(t) at a spreading modulation unit 112 to create a spread spectrum signal s(t). Both the information modulated wave b(t) and the spreading code c(t) are signals having amplitudes of $\pm1$. Provided that the spread spectrum signal s(t) is obtained by multiplying the information modulated wave b(t) by the spreading code c(t), then the spread spectrum signal s(t) is expressed as follows:

$$s(t)=b(t)\times c(t)$$

The obtained spread spectrum signal s(t) is up-converted in a frequency converter 113, and transmitted from an antenna for the radio communication.

Fig.34 is a block chart of the receiver using the spread spectrum.

The signal received by an antenna is down-converted at a frequency converter 119 to obtain a spread spectrum signal s(t). An oscillator 122 and a code synchronization control circuit 121 takes a synchronous signal from the spread spectrum signal s(t), and generates a PN code. From the PN signal, a spreading code generator 120 generates a same spreading code c(t) as the transmitting side. A spreading demodulation unit 118 multiplies the spreading code c(t) with the spread spectrum signal s(t) to obtain an information modulated wave b(t). The information modulated wave b(t) is demodulated using the $\pi/4$ shift QPSK at an information demodulation unit 117 to regenerate a digital information a(t).

To re-obtain the information modulated wave b(t) from the received spectrum spread signal s(t), the spectrum spread signal s(t) is divided by the spreading code c(t). However, when the spreading code c(t) is conditioned to take a value of $\pm1$, the division is implemented by multiplying. That is, regeneration of the information modulated wave b(t) is implemented as follows.

$$\begin{aligned}
s(t)\times c(t) &= \{b(t)\times c(t)\}\times c(t)\\
&= b(t)\times c^2(t)\\
&= b(t) \qquad (\because c^2(t) = 1)
\end{aligned}$$

Fig.35 illustrates a conventional configuration of a radio transmitter and a radio receiver using a conventional TDMA method.

Fig.36 illustrates a spectrum of $\pi/4$ shift QPSK modulated signals using the conventional TDMA method.

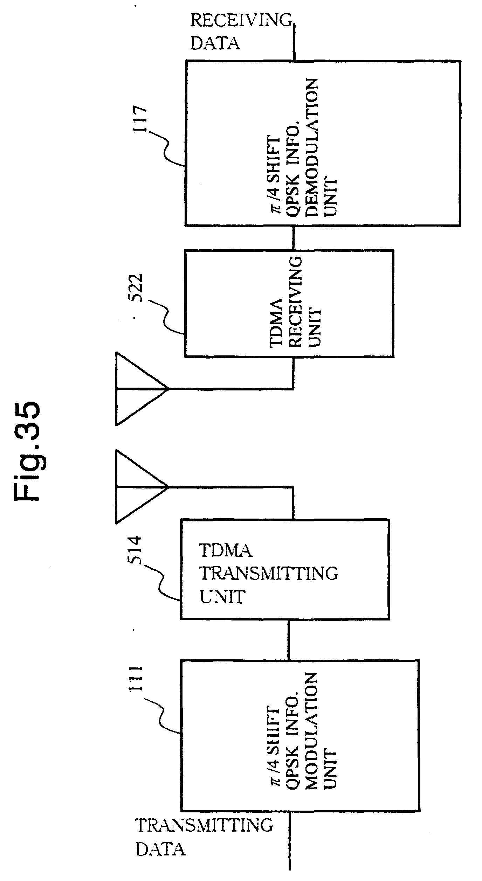

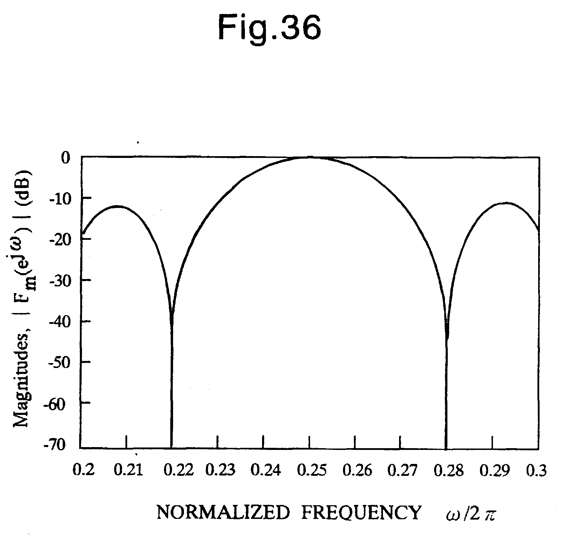

In the conventional TDMA method, the $\pi/4$ shift QPSK method is used in modulating and demodulating digital signals, as shown in Fig.35. For the case of this modulation method, inside a band of a normalized frequency ranging from 0.22 to 0.28($\omega/2\pi$), as shown in Fig.36, the spectrum shows a round curve. The distribution of spectrum inside this band gets weaker as it shifts from the center to the sides, indicating that a permissive amount energy in the band is not being used adequately.

Related Art 2

Recently, an announcement is made on a technique to perform a high-speed data communication using a general telephone channel. This is the technique that uses an asymmetric digital subscriber line (ADSL), and uses a multicarrier transmission method called discrete multitone (DMT). For the related technique, for example, refer to "Nikkei Electronics 1996", 11-18, P89~108; Nikkei BP Sha.

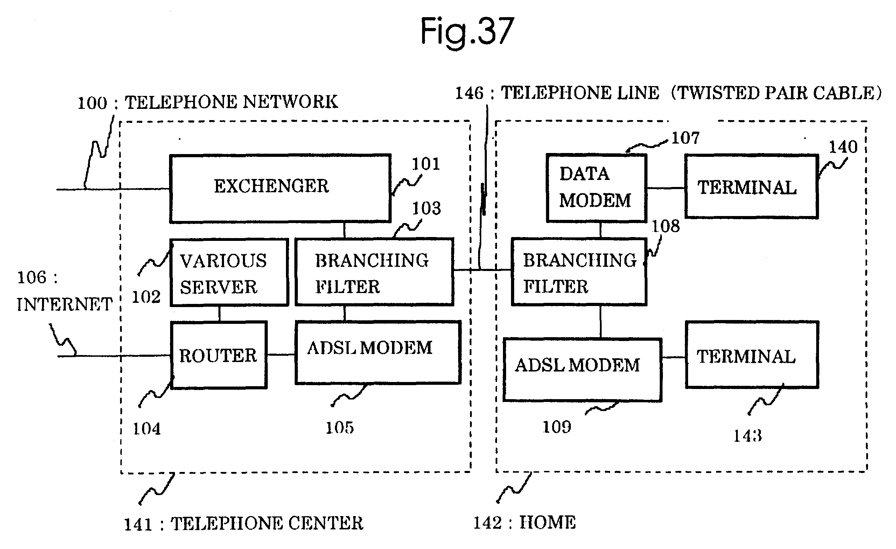

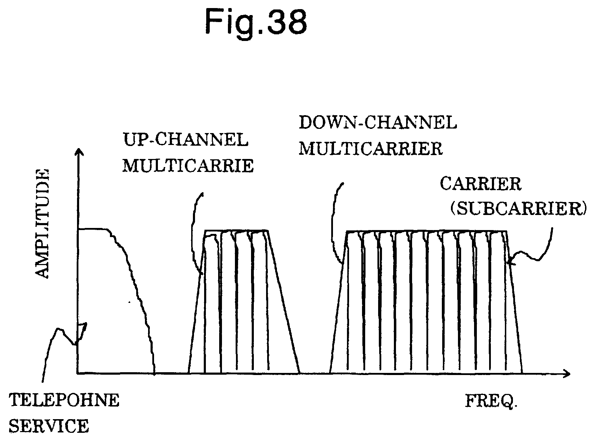

Fig.37 illustrates configuration of the ADSL. Fig.38 illustrates a frequency distribution of the ADSL (DMT method).

A telephone center 141 is provided with an exchanger 101, various servers 102, a branching filter 103, a router 104 and an ADSL modem 105. Each home 142 is provided with a data modem 107, a branching filter 108, an ADSL modem 109, a terminal 140 and a terminal 143. The branching filter 108 also has a function of a coupler. As two types of communication, there are a voice communication and a data communication. A case of the data communication is described as an example hereinafter.

A data of the telephone service inputted from a telephone network 100 is transmitted to a telephone line 146 by the branching filter 103 via the exchanger 101. On the other hand, a data inputted from an internet 106, or a data provided from the servers 102 are sent to the ADSL modem 105 via the router 104. The ADSL modem 105 modulates the data using the down-channel multicarrier shown in Fig.38, and sends a modulated multicarrier modulation data to the branching filter 103. The branching filter 103 combines the data from the exchanger 101 and the ADSL modem 105, and the combined data is carried by the telephone line 146. Then, the branching channel 108 at the home 142 branches the data of the telephone service to the data modem 107. Also, the multicarrier modulation data carried by the down-channel multicarrier is separated to the ADSL modem 109. The data modem 107 converts the data obtained from the filter channel 108 from analog to digital, and the digital data is sent to the terminal 140. On the other hand, the ADSL modem 109 demodulates the multicarrier modulation data and sends to the terminal 143.

On the other hand, the data generated at the terminals 140 and 143 are sent to the telephone center 141 by means of reversed paths. The data generated at the terminal 140 is sent using a band of the telephone service, which is sent to the telephone network 100 via the exchanger 101. The data generated at the terminal 143 is sent to the telephone center 141 using an up-channel multicarrier, which is then sent to the internet 106 after being converted to the digital data by the ADSL modem 105.

In ADSL, the telephone service of the general telephone network and the internet data re received and transmitted separately using different frequencies identified by the branching filter. Especially for a case of the DMT method which uses the multicarrier communication method, as the figure shows, the multicarrier has a plurality of carriers (subcarriers) for both up and down channel. OFDM (orthogonal frequency division multiplexing) method is used to implement the DMT method.

Using the OFDM method, the ADSL is able to data communicate at a rate of 64Kbps to 1.3Mbps for up channel and at the rate of 1.5Mbps to 12Mbps for down channel.

An advantage of adopting CDMA method compared to TDMA method or FDMA method is a larger communication capacity, however, recently, it is important to further increase the communication capacity more than the conventional communication capacity of CDMA method. In the future, in order to implement a picture transmission through a radio communication, a demand to further increase the communication capacity of the existing CDMA method is to become indispensable in a near future.

However, to this day, a technique that can improve the communication capacity of CDMA method by several times more without deteriorating the reception sensitivity or without the spread of bandwidth is not available.

Also, there is a constant topic of needing to achieve a higher transmission rate than the conventional transmission rate within a limited frequency bandwidth.

The present invention aims to increase further the communication capacity of the existing multiple access method such as CDMA method and TDMA method, without deteriorating the reception sensitivity or without the spread of bandwidth.

Further, the present invention aims to implement the higher transmission rate within the limited frequency bandwidth.

The previously described ADSL is a technique for a wire communication, and still no consistency measure is taken with a radio communication.

The present invention aims to transmit and receive signals received by the ADSL for a radio communication. Also, the present invention aims to simplify the data interface between wire communication and radio communication, by efficiently converting data of wire communication to data of radio communication.

Disclosure of the Invention

According to one aspect of the present invention, a transmitter comprises: a multicarrier modulation unit for inputting a digital signal, performing a multicarrier modulation of an inputted signal, and outputting a modulated multicarrier signal; and a multiple access transmitting unit for inputting the modulated multicarrier signal, modulating the modulated multicarrier signal by using a multiple access method, and transmitting a modulated signal.

According to another aspect of the present invention, the transmitter includes the multicarrier modulation unit which performs the multicarrier modulation by using Orthogonal Frequency Division Multiplexing (OFDM) method.

According to another aspect of the present invention, the transmitter includes the multicarrier modulation unit which comprises a discrete multitone (DMT) modulation unit for performing Inverse Fourier Transformation.

According to another aspect of the present invention, the transmitter includes the multicarrier modulation unit which comprises a discrete wavelet multitone modulation unit for performing Discrete Wavelet Inverse Transformation.

According to another aspect of the present invention, the transmitter includes the multiple access transmitting unit which comprises a CDMA transmitting unit for inputting the modulated multicarrier signal, and for modulating the modulated multicarrier signal by using Code Division Multiple Access (CDMA) method.

According to another aspect of the present invention, the transmitter includes the multiple access transmitting unit which comprises a TDMA transmitting unit for inputting the modulated multicarrier signal, and for modulating the modulated multicarrier signal by using Time Division Multiple Access (TDMA) method.

According to another aspect of the present invention, the transmitter includes the multiple access transmitting unit which comprises FDMA transmitting unit for inputting the modulated multicarrier signal, and for modulating the modulated multicarrier signal by using Frequency Division Multiple Access (FDMA) method.

According to another aspect of the present invention, the transmitter includes the multicarrier modulation unit which generates subchannels having different data transmission rates based on positions of the subchannel configuring the multicarriers.

According to another aspect of the present invention, the transmitter includes the multicarrier modulation unit which generates subchannels having different powers based on the positions of the subchannels configuring the multicarriers.

According to another aspect of the present invention, a receiver comprises: a multiple access demodulation unit for inputting the modulated signal, demodulating the modulated signal by using a multiple access method, and outputting a demodulated signal; and a multicarrier demodulation unit for inputting the demodulated signal, performing a multicarrier demodulation of the demodulated signal by a multicarrier demodulation, and outputting a digital signal.

According to another aspect of the present invention, the receiver includes the multicarrier demodulation unit which performs multicarrier demodulation by using Orthogonal Frequency Division Multiplexing (OFDM) method.

According to another aspect of the present invention, the receiver includes the multicarrier demodulation unit which comprises a discrete multitone (DMT) demodulation unit for performing Fourier Transformation.

According to another aspect of the present invention, the receiver includes the multicarrier demodulation unit which comprises a discrete wavelet multitone (DWMT) demodulation unit for performing Discrete Wavelet Transformation.

According to another aspect of the present invention, the receiver includes the multiple access demodulation unit which comprises a CDMA receiving unit for inputting the modulated signal, and for demodulating the modulated signal by using Code Division Multiple access (CDMA) method.

According to another aspect of the present invention, the receiver includes the multiple access demodulation unit which comprises a TDMA receiving unit for inputting the modulated signal, and for demodulating the modulated signal by using Time Division Multiple Access (TDMA) method.

According to another aspect of the present invention, the receiver includes multiple access demodulation unit which comprises a FDMA receiving unit for inputting the modulated signal, and for demodulating the modulated signal by using Frequency Division Multiple Access (FDMA) method.

According to another aspect of the present invention, the receiver includes the multicarrier demodulation unit which inputs and demodulates subchannels having different data transmission rates based on positions of the subchannels configuring the multicarriers.

According to another aspect of the present invention, the receriver includes the multicarrier demodulation unit which inputs and demodulates subchannels having different powers based on positions of the subchannels configuring the multicarriers.

According to another aspect of the present invention, a transmitter comprises: a carrier selection unit for inputting a multicarrier signal where a wire data and a radio data are assigned to their respective predetermined subcarriers, and selecting a subcarrier signal where the radio data is assigned from the multicarrier signal; a modulation unit for inputting a selected subcarrier, modulating the selected subcarrier, and outputting a modulated signal; and a transmitting unit for inputting the modulated signal and outputting the modulated signal as a radio signal.

According to another aspect of the present invention, the transmitter includes the multicarrier signal which is input to an Asymmetric Digital Subscriber Line (ADSL) modem, and branched to the transmitter.

According to another aspect of the present invention, the transmitter includes the multicarrier signal which is generated by the Discrete Orthogonal Wavelet Inverse Transforamtion.

According to another aspect of the present invention, a receiver comprises: a demodulation unit for receiving a radio signal, demodulating the radio signal, and outputting a demodulated signal; and a frequency converter for inputting the demodulated signal, converting the demodulated signal to a subcarrier signal having a frequency of pre-assigned subcarriers, and outputting the subcarrier signal of a multicarrier signal.

According to another aspect of the present invention, the receiver includes the subcarrier signal which is added to the multicarrier signal output from the ADSL modem.

According to another aspect of the present invention, the receiver includes the multicarrier signal which is generated by the Discrete Orthogonal Wavelet Inverse Transformation.

According to another aspect of the present invention, a transmitting method comprises: a multicarrier modulation step including steps of inputting a digital signal, performing a multicarrier modulation, and outputting a modulated multicarrier signal; and a multiple access modulation step including steps of inputting the modulated multicarrier signal, modulating the modulated multicarrier signal by using a multiple access method and outputting a modulating signal.

According to another aspect of the present invention, a receiving method comprises: a multiple access demodulation step including steps of inputting the modulated signal, demodulating the modulated signal by using a multiple access method, and outputting a demodulated signal; and a multicarrier demodulation step including steps of inputting the demodulated signal, performing a multicarrier demodulation of the demodulated signal, and outputting a digital signal.

According to another aspect of the present invention, a transmitting method comprises: a carrier selection step including steps of inputting multicarrier signal where a wire data and a radio data are assigned to their respective pre-determined subcarriers, and selecting a subcarrier signal where the radio data is assigned from the multicarrier signal; a modulation step for inputting a selected subcarrier, modulating the selected subcarrier, and outputting a demodulated signal; and a transmitting step for inputting the modulated signal and outputting the modulated signal as a radio signal.

According to another aspect of the present invention, a receiving method comprises: a demodulation step including steps of receiving radio signal, demodulating the radio signal, and outputting a demodulated signal; and a frequency conversion step including steps of inputting the demodulated signal, converting the demodulated signal to a subcarrier signal having a frequency of pre-assigned subcarriers, and outputting the subcarrier signal of a multicarrier signal.

Brief Description of the Drawings

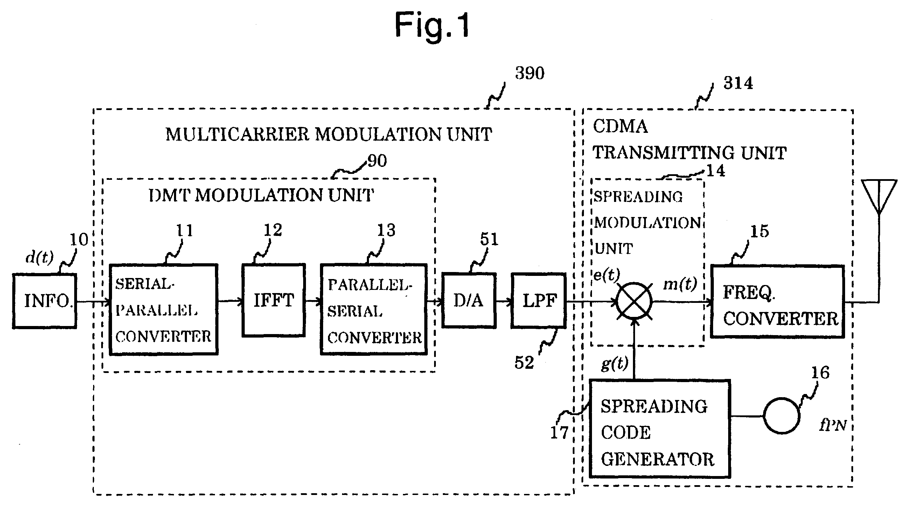

Fig.1 illustrates a transmitter of embodiment 1 of the present invention.

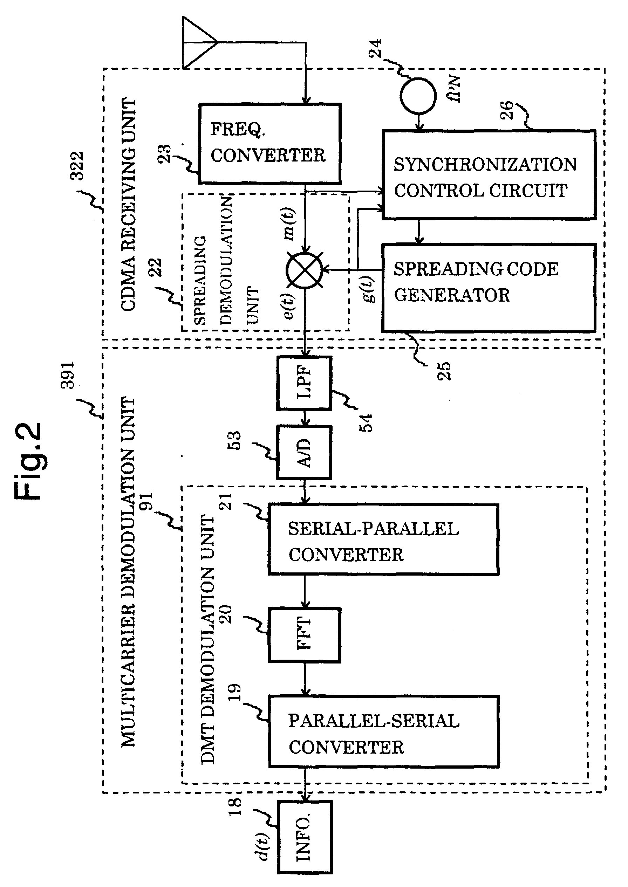

Fig.2 illustrates a receiver of embodiment 1 of the present invention.

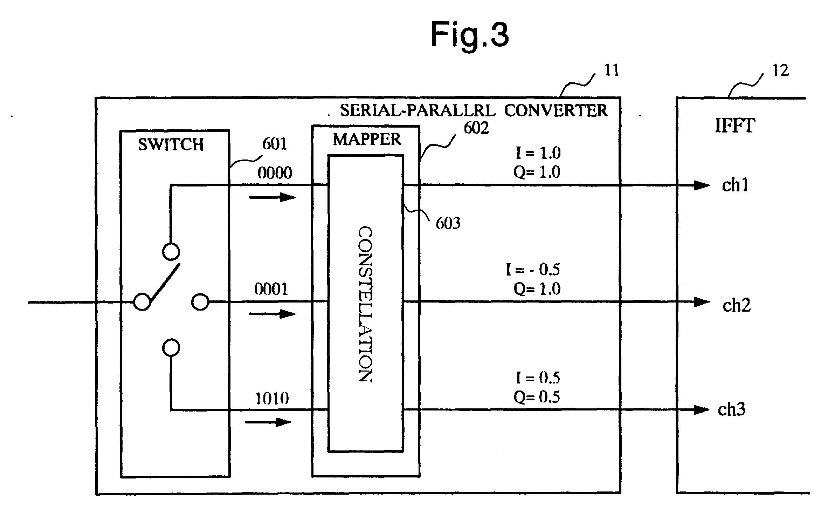

Fig.3 illustrates a configuration of a serial-parallel converter 11.

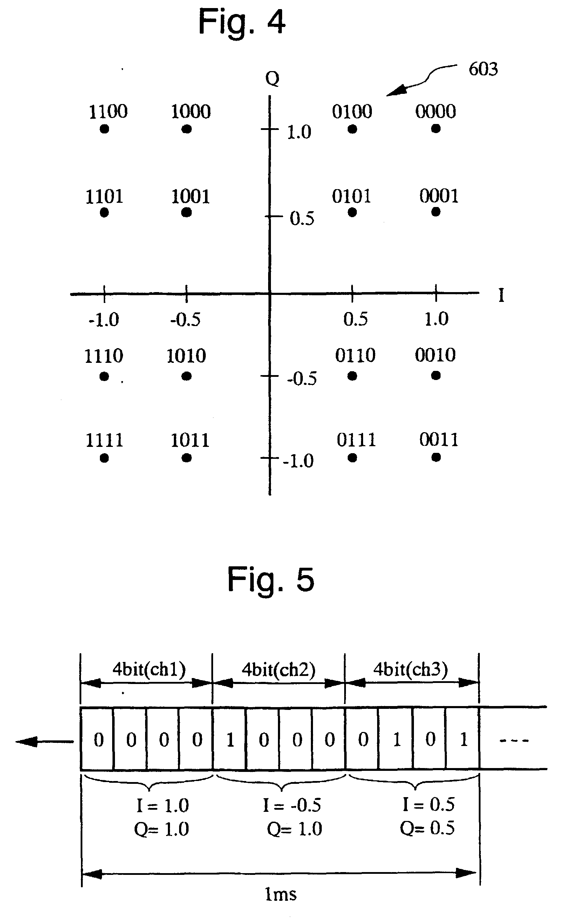

Fig.4 illustrates a constellation 603.

Fig.5 illustrates a data sequence.

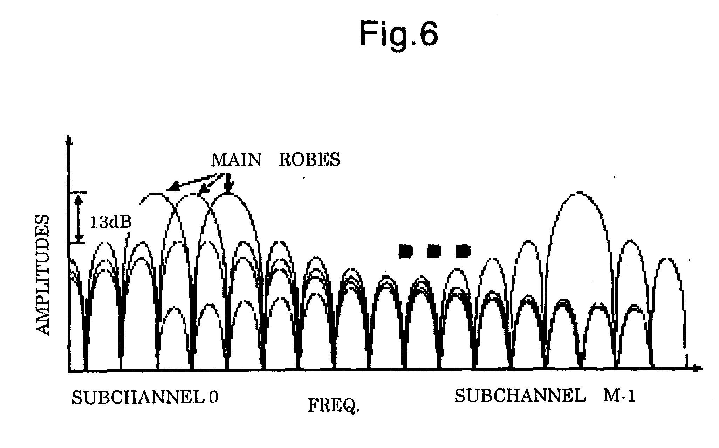

Fig.6 illustrates a frequency spectrum of a multicarrier modulation by the Fourier transformation.

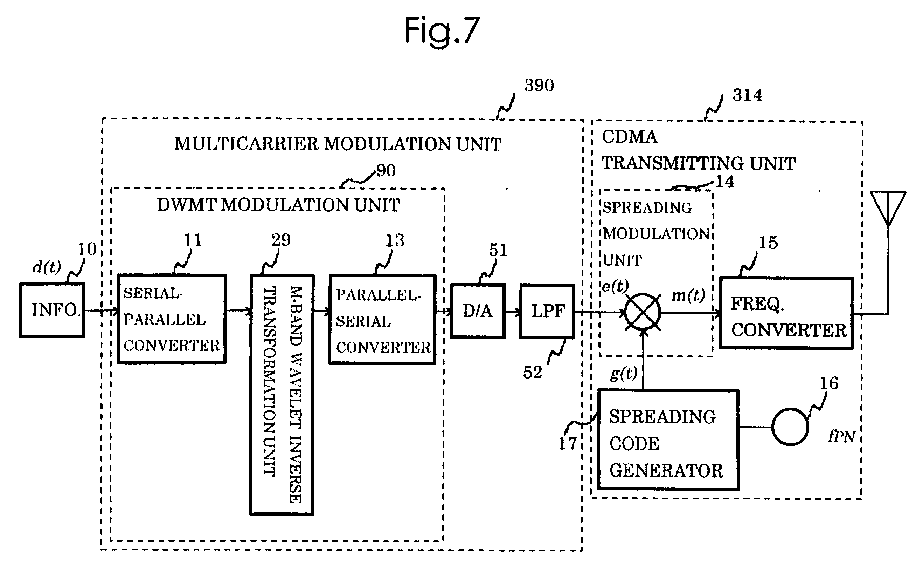

Fig.7 illustrates a transmitter of embodiment 2 of the present invention.

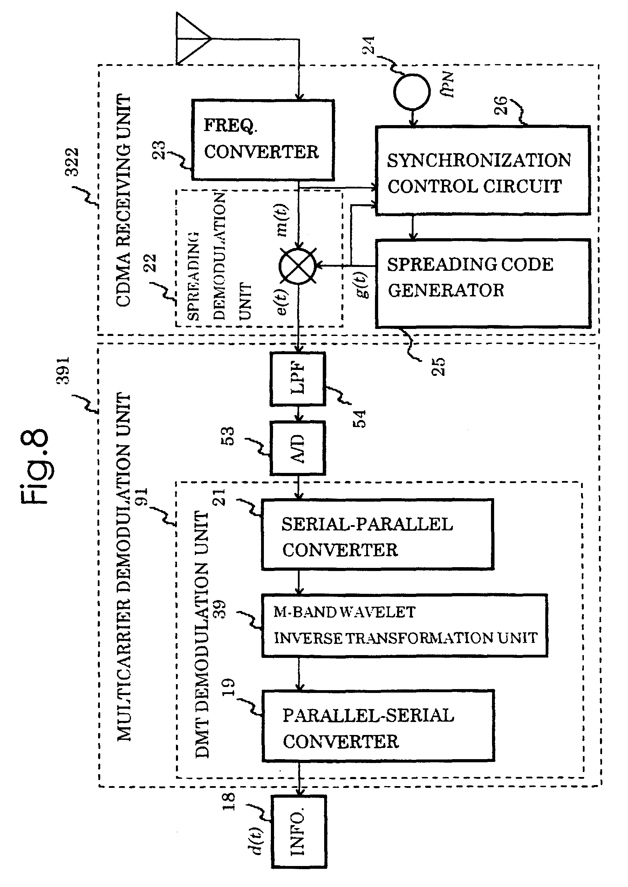

Fig.8 illustrates a receiver of embodiment 2 of the present invention.

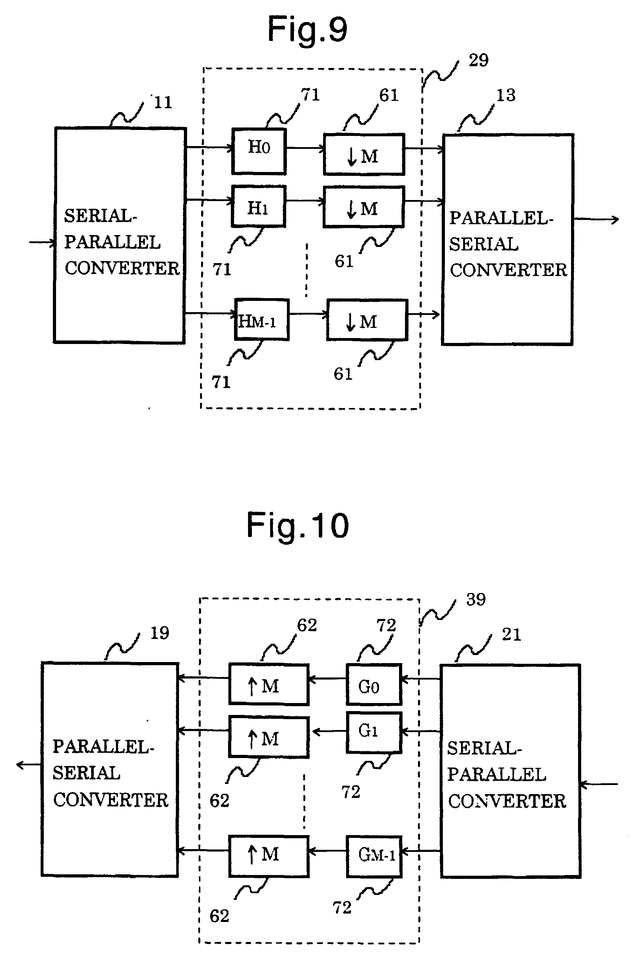

Fig.9 explains a M-band wavelet inverse transformation.

Fig.10 explains a M-band wavelet transformation.

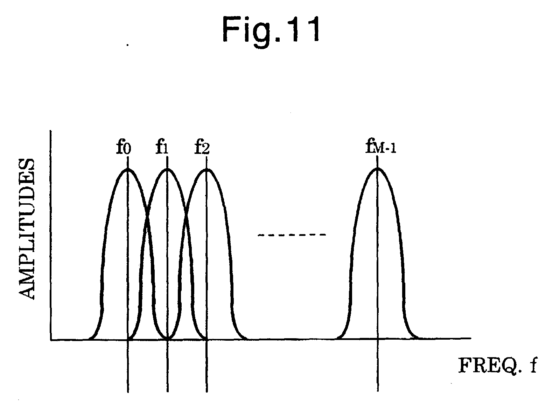

Fig.11 illustrates subcarriers of the multicarrier modulation.

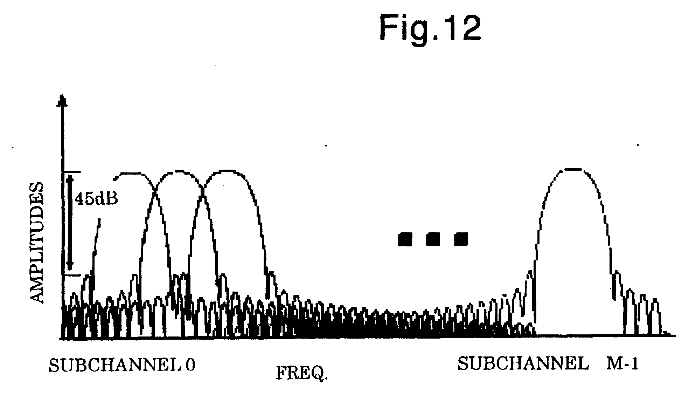

Fig.12 illustrates a frequency spectrum of the multicarrier modulation by discrete orthogonal wavelet transformation.

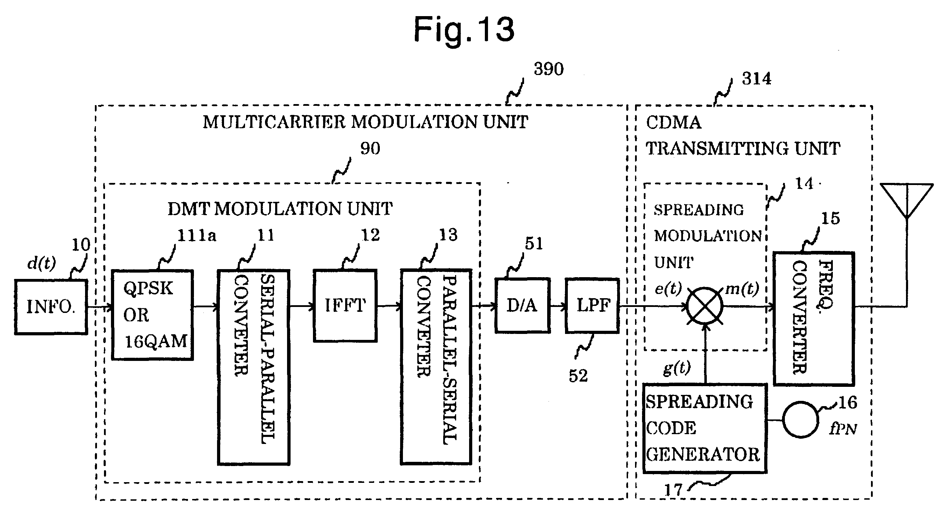

Fig.13 illustrates another example of the DMT modulation unit.

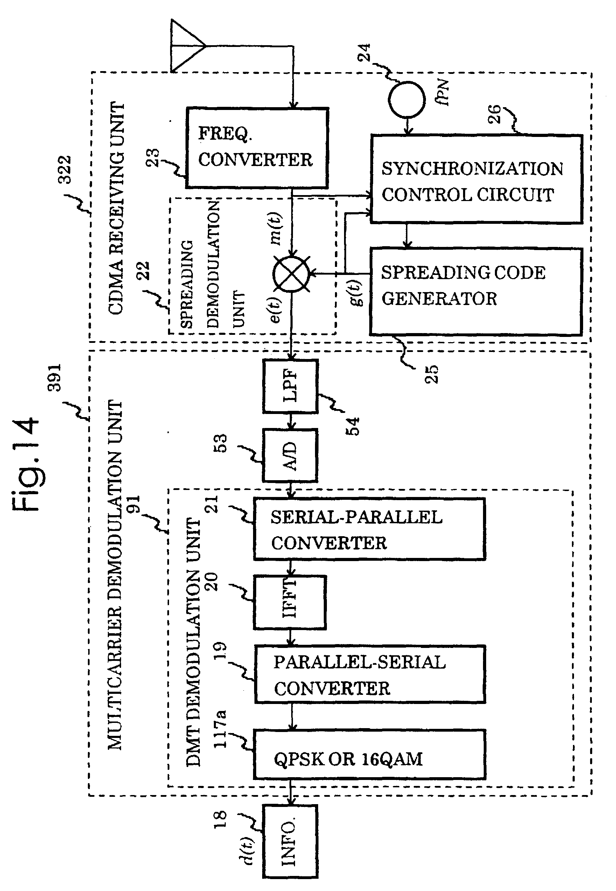

Fig.14 illustrates another example of the DMT demodulation unit.

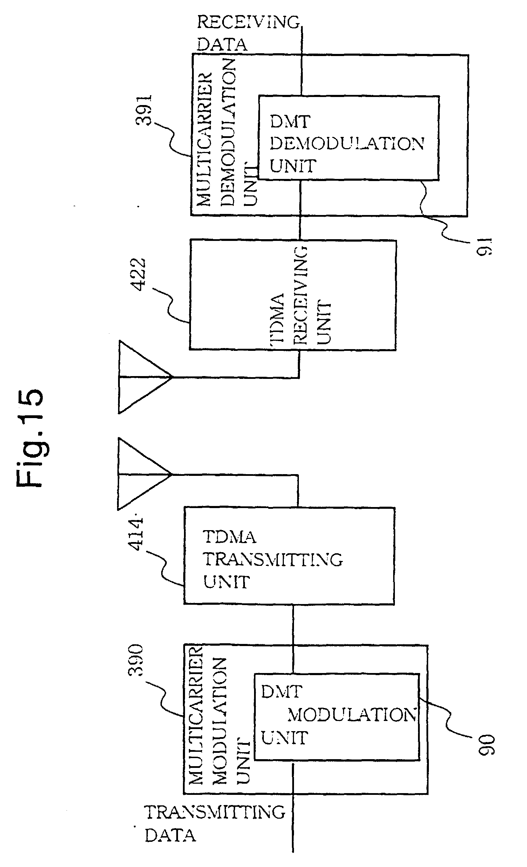

Fig.15 illustrates a transmitter and a receiver of embodiment 3 of the present invention using the DMT method.

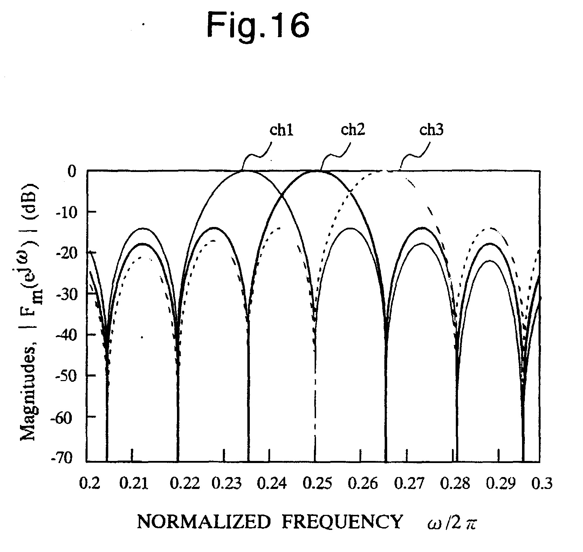

Fig.16 illustrates a frequency spectrum for the case of using the DMT method.

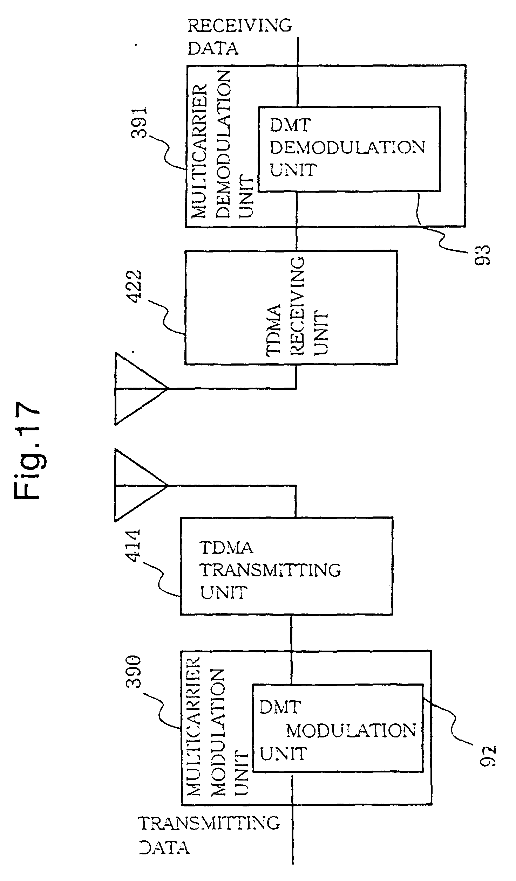

Fig.17 illustrates a transmitter and a receiver of embodiment 3 of the present invention using the DMT method.

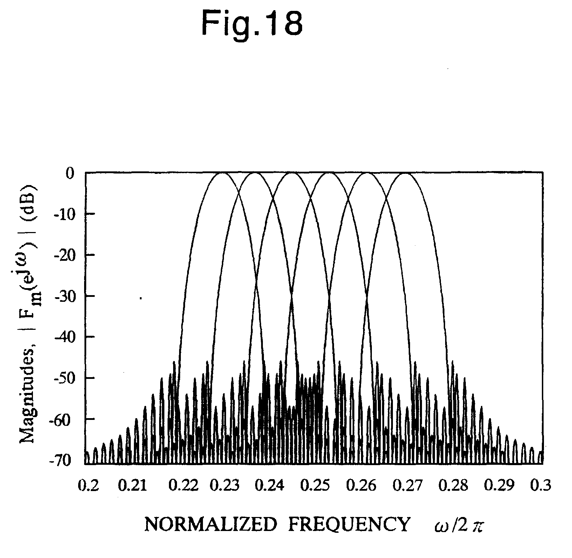

Fig.18 illustrates a frequency spectrum for the case of using the DMT method.

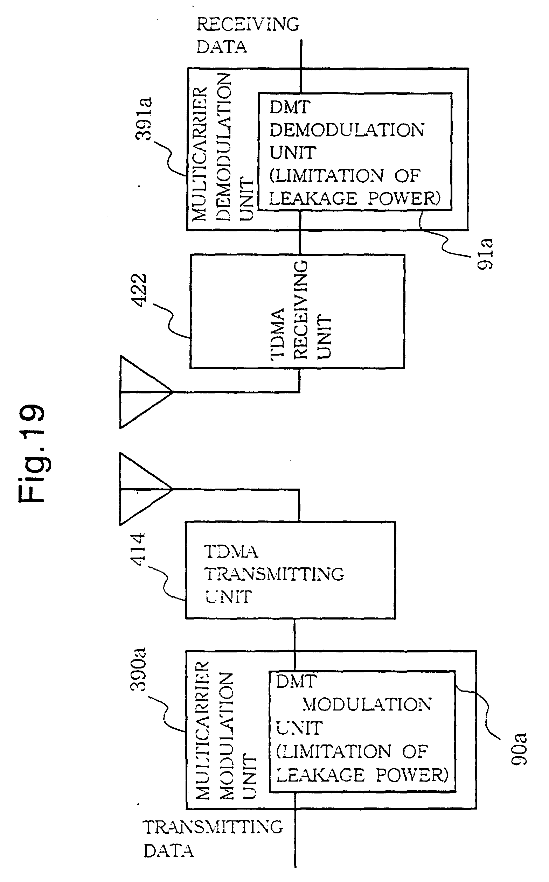

Fig.19 illustrates the transmitter and the receiver for a case of limiting a leakage power.

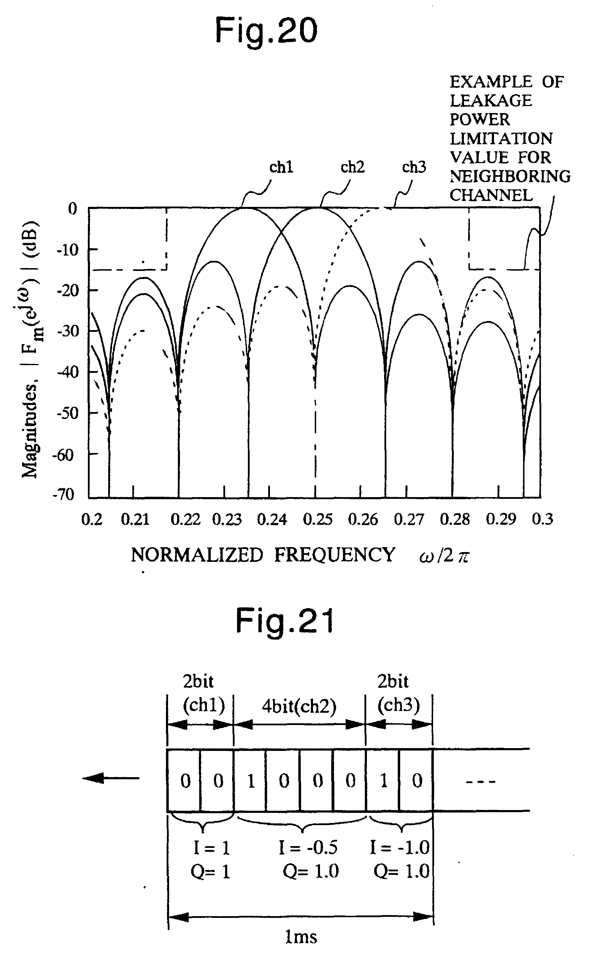

Fig.20 illustrates a frequency spectrum for the case of limiting the leakage powers.

Fig.21 illustrates a data series for the case of limiting the leakage powers.

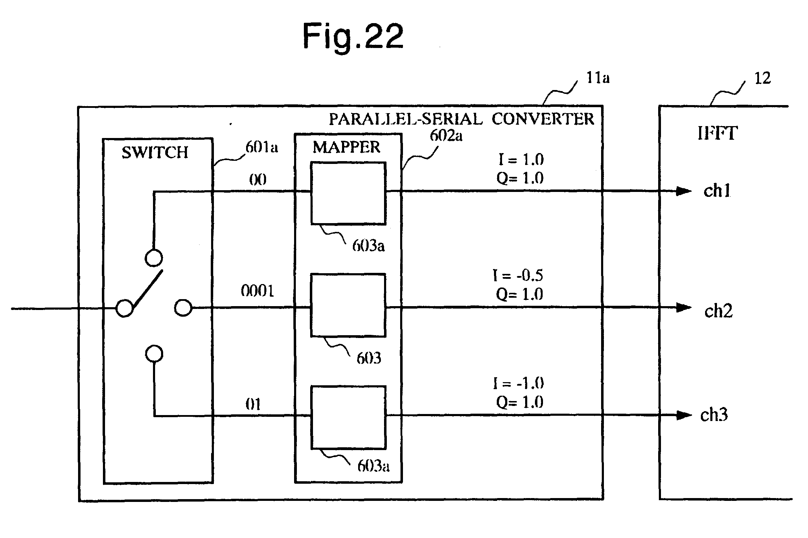

Fig.22 illustrates a configuration of a serial-parallel converter 11a.

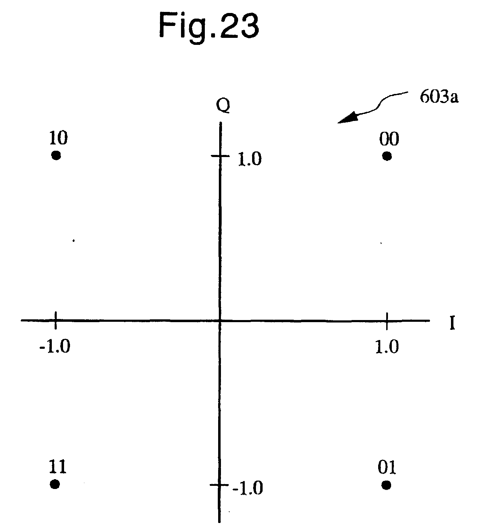

Fig.23 illustrates a constellation 603a.

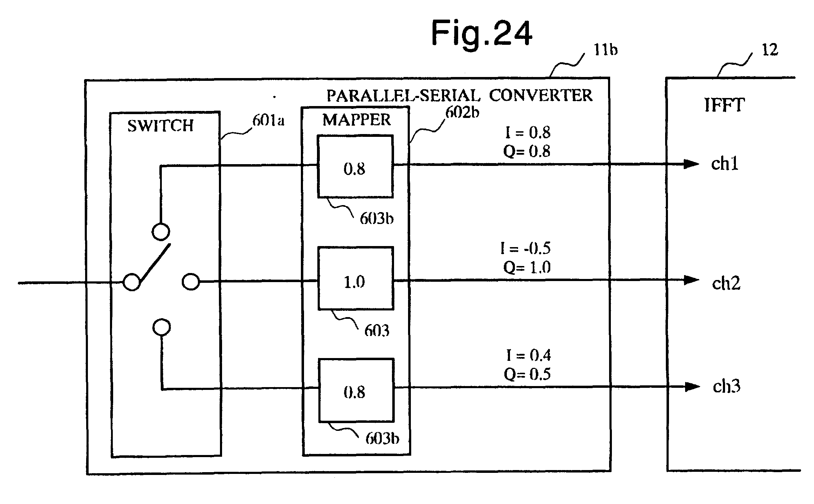

Fig.24 illustrates a configuration of a serial-parallel converter 11b.

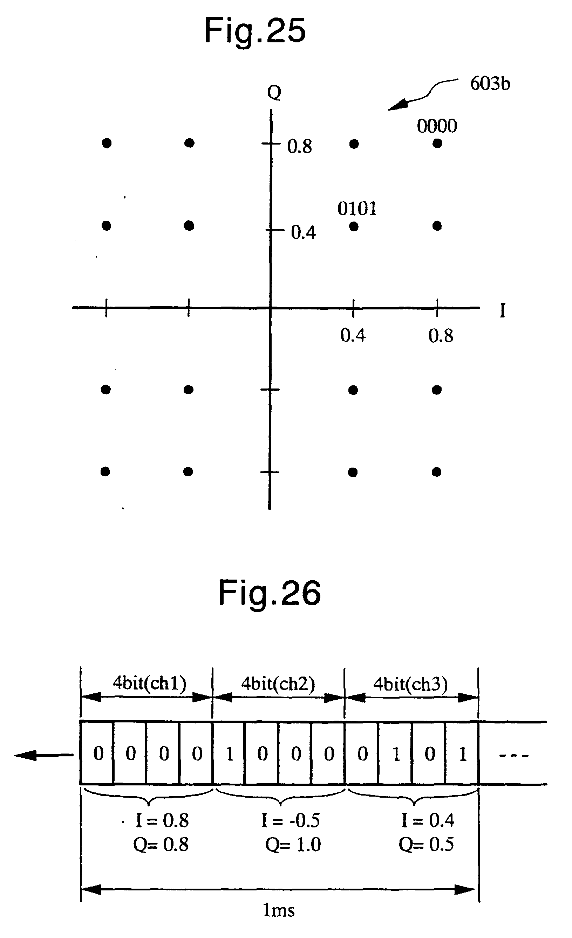

Fig.25 illustrates a constellation 603b.

Fig.26 illustrates a data series.

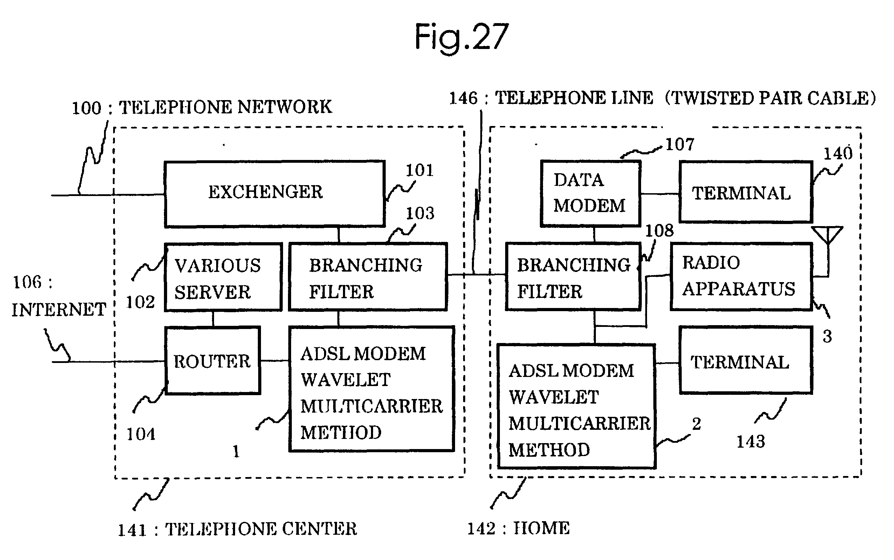

Fig.27 illustrates a configuration of digital communication system of embodiment 4 of the present invention.

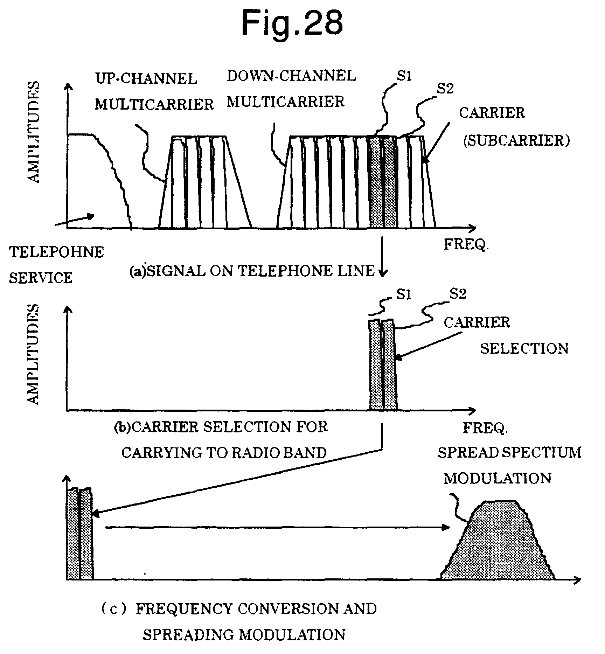

Fig.28 illustrates a configuration of transmission frequency of the digital communication system of embodiment 4 of the present invention.

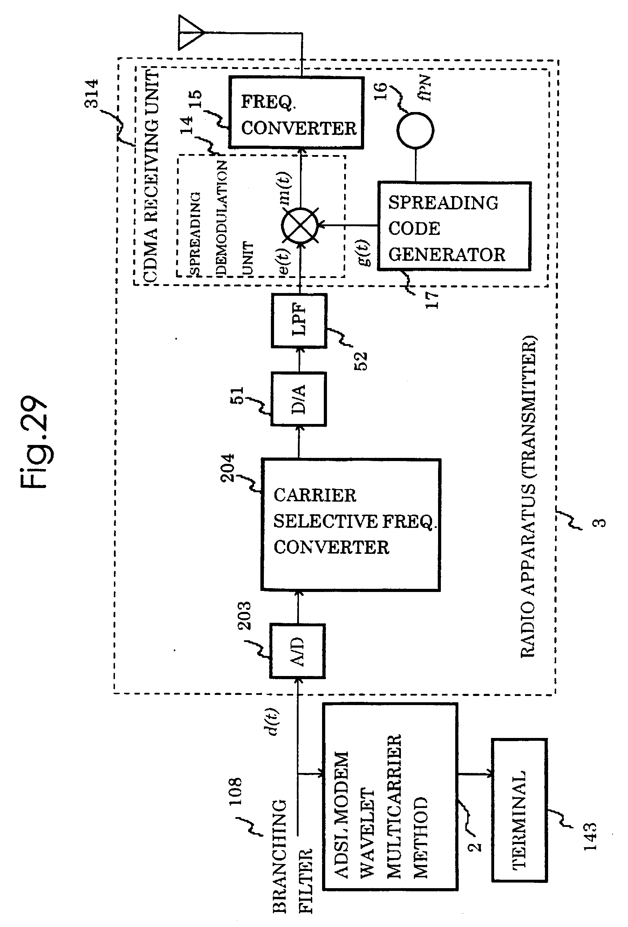

Fig.29 illustrates a transmitter of radio apparatus of embodiment 4 of the present invention.

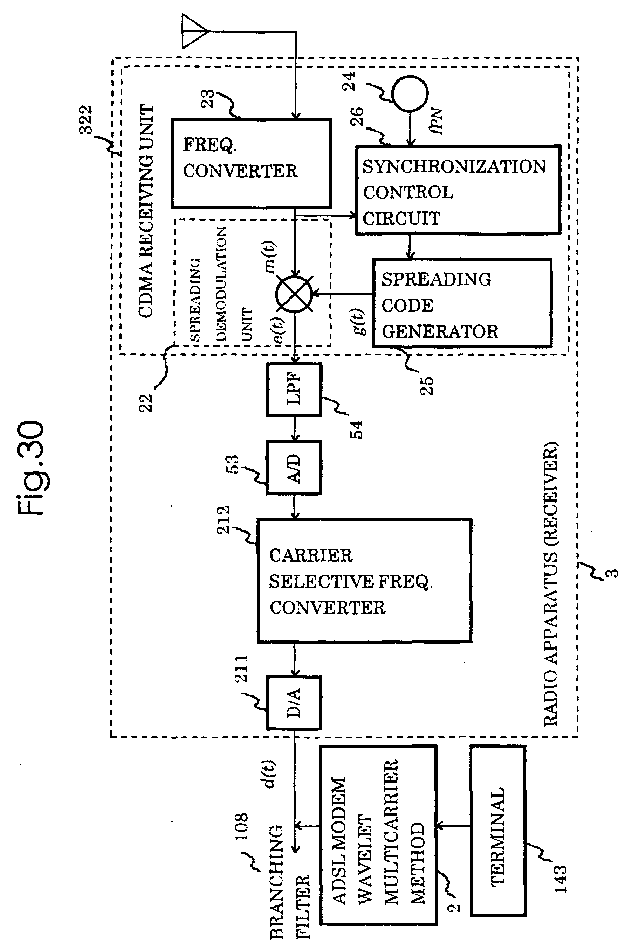

Fig.30 illustrates a receiver of the radio apparatus of embodiment 4 of the present invention.

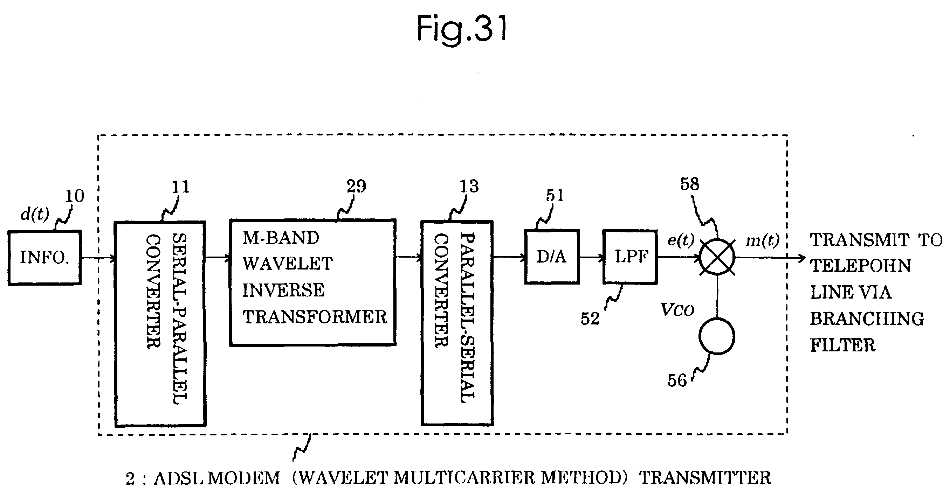

Fig.31 illustrates a transmitter of ADSL modem of embodiment 4 of the present invention.

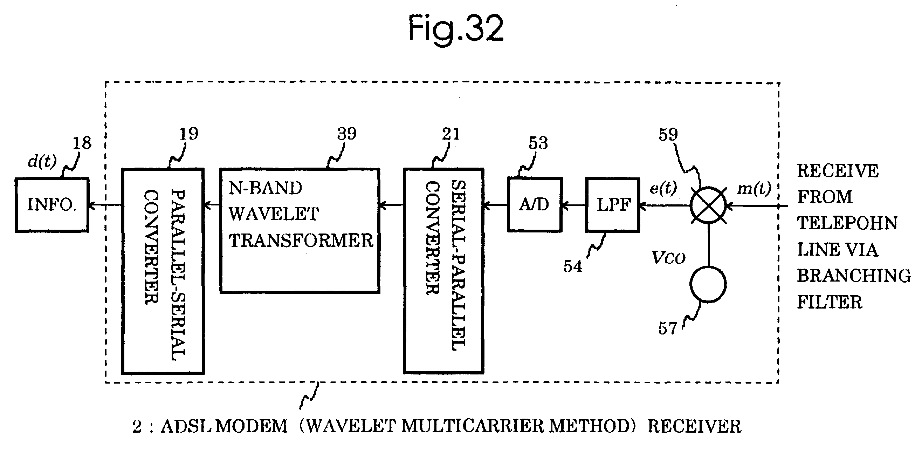

Fig.32 illustrates a receiver of the ADSL modem of embodiment 4 of the present invention.

Fig.33 illustrates the conventional transmitter.

Fig.34 illustrates the conventional receiver.

Fig.35 illustrates the conventional transmitter and the receiver.

Fig.36 illustrates the conventional frequency spectrum.

Fig.37 illustrates the conventional configuration of the digital communication system.

Fig.38 illustrates the conventional configuration of the transmission frequency of the digital communication system.

Best Mode for Carrying out the Invention

Embodiment 1.

The embodiment 1 of the present invention will be described with reference to the drawings.

Figs.1 and 2 illustrate configurations of the transmitter and the receiver of embodiment 1 of the present invention.

The transmitter is configured from a multicarrier modulation unit 390 and a CDMA transmitting unit 314. The transmitter is provided with a DMT (discrete multitone) modulation unit 90 and the receiver is provided with a DMT demodulation unit 91. The transmitter and the receiver perform the multicarrier modulation by using the OFDM method at the DMT modulation unit 90 and the DMT demodulation unit 91.

As illustrated in the transmitter of Fig.1, a digital information d(t) is serial-parallel converted at a serial-parallel converter 11, and each one of symbol sequences of the digital information are converted to an information for carrying to their respective subcarriers. Next, the serial-parallel converted data are carried to respective subcarriers, and to make their frequency components to data series along a time axis, or in other words, to the data of a transmission time sequence, Inverse Fast Fourier Transformation is performed using IFFT (Inverse Fast Fourier Transfomer) 12. A multicarrier dispersion processing is performed in the IFFT 12. After this, the data is parallel-serial converted at a parallel-serial converter 13, and the data is digital/analog (D/A) converted at a D/A converter 51 to form a baseband time sequence, then a low-pass filter (LPF) 52 is applied, and a modulation multicarrier e(t) is obtained. An example of the modulation method being used in this case to perform the multicarrier modulation is the orthogonal frequency division multiplexing (OFDM) method such as what is being adopted in the high definition television (HDTV). A spreading code g(t) is generated at an oscillator 16 and a spreading code generator 17 based on a PN code, and a multiplication of the spreading code g(t) and the modulation multicarrier e(t) is performed in the spreading modulation unit 14, to generate a multicarrier spread spectrum signal m(t).

This multicarrier spread spectrum signal m(t) is up-converted at the frequency converter 15, and transmitted from an antenna for the radio communication.

Fig.2 is a block chart of the receiver.

The signal received from an antenna is down-converted at a frequency converter 23 to obtain a multicarrier spread spectrum signal m(t). A PN code is generated by synchronizing with the multicarrier spread spectrum signal m(t) at an oscillator 24 and a code synchronization control circuit 26. A spreading code generator 25 generates a same spreading code g(t) as the transmitting side from the PN code. The spreading demodulation unit 22 multiplies the spreading code g(t) and the multicarrier spread spectrum signal m(t) to obtain the modulation multicarrier e(t). A LPF 54 is applied to the obtained modulation multicarrier e(t), and the obtained modulation multicarrier e(t) is converted to digital signal at an A/D converter 53, and then a serial-parallel converted at the serial-parallel converter 21. This serial-parallel converted data is a data along the time axis, and this data is converted to a data along a frequency axis, and in order to draw-out the data carried by respective subcarriers, a Fast Fourier Transformation is applied by the Fast Fourier Transformer (FFT) 20. Further, a digital information d(t) is regenerated through a reversed process of the receiver by a parallel-serial conversion at a parallel-serial converter 19.

Hereinbelow, the multicarrier modulation will be described.

A transmission channel of the multicarrier modulation method is made of a plurality of subchannels. Each subchannel uses a carrier wave.

Division of the subchannels need to be independent so that each one of the subchannels are successfully separate from one another. In the embodiment 1, generation and modulation/demodulation of the plurality of subchannels are performed by Inverse Discrete Fourier Transformation and the Discrete Fourier Transformation. In the embodiment 1, an orthogonal transformation is implemented by grouping a series of data sequence in a block (this is called mapping). This processing corresponds to FFT and IFFT of the figures.

Fig.3 indicates the mapping operation.

A switch 601 and a mapper 602 are set at the serial-parallel converter 11. The mapper 602 stores a constellation, as illustrated in Fig.4. When the series of data sequence shown in Fig.5 is inputted to the switch 601, the switch 601 splits the data sequence to 4-bits blocks, and the split blocks are transferred to the mapper. The mapper 602 refers to the constellation 603 to output a value I of the same phase and a value Q of orthogonal phase. The I value and the Q value of Fig.4 illustrate a case when maximum values of an absolute value of I and an absolute value of Q are 1.0. The data outputted from the mapper 602 in parallel are inputted to subchannels 1, 2 and 3 (ch1, ch2, and ch3) of IFFT.

For the case of data illustrated in Fig.5, this is the case of transmitting 12 bits at 1ms, that is, it is the case of sending data at a transmission rate of 12 Kbps (bit per second). The 12 bits of data is split in blocks of 4 bits each, therefore, the transmission rate of three subchannels 1, 2 and 3 (ch1, ch2 and ch3) is 4Kbps each.

The parallel-serial converter 19 of the receiver (not illustrated) has a demapper which performs a reversed operation of the mapping of the serial-parallel converter 11. The mapper and the demapper operates using the same constellation.

An example of frequency spectrum for the modulation multicarrier e(t) at the previously described method is illustrated in Fig.6.

The horizontal axis indicates the frequency and the vertical axis indicates the amplitude. Fig.6 illustrates a case of the multicarrier modulation for the subchannel 0 to M-1 (total of subchannel is M band) M number of main robes are overlapping in parts, however, data can still be correctly generated since the main robes are orthogonal.

In the present invention, the multicarrier modulation is implemented at the information modulation unit so that the transmission capacity is larger than a single tone modulation in the conventional information modulation unit . Effects of the larger transmission capacity are an increased number of communication channels, and an increased transmission rate in one channel.

The characteristic point of the present embodiment is that the muticarrier modulation and the spread spectrum are being combined. The multicarrier modulation technique itself is conventionally a well-known one. The technique of spread spectrum is also well-known conventionally. However, a technique that combines the multicarrier modulation and the spread spectrum and make use of merits from the both are not available. The combination of the two is the main characteristic of the present embodiment.

Embodiment 2

The embodiment 2 of the present invention will be described next. Particularly, a point of difference from the embodiment 1 will be described.

Fig.7 illustrates a block chart of the transmitter.

The multicarrier modulation unit 390 has DWMT (discrete wavelet multitone) modulation unit 92. As the receiver of Fig.7 shows, a digital information d(t) is series-parallel converted to load each one of the symbol sequences of the digital symbol information to their respective subcarriers.

Next, M-band wavelet inverse transformation is performed in the M-band wavelet inverse transformation unit 29, for making the information to the transmission time sequence. In the M-band wave increase transformation unit 29, the multicarrier dispersion processing is performed using the discrete orthogonal wavelet inverse transformation (simply referred to as the wavelet inverse transformation). The operation onwards are same as the embodiment 1.

Fig.8 is a block chart of the receiver.

The multicarrier demodulation unit 391 has a DWMT demodulation unit 93.

The processes involved from the process of receiving signal received from antenna up to the process of series-parallel transformation is same as embodiment 1. The present embodiment further includes generating of the digital information d(t) through a reversed process of the transmitter, which is made possible by the M-band wavelet transformer by using the discrete orthogonal wavelet transformation (simply referred to as the wavelet transformation) at the M-band wavelet transformation unit 39.

Fig.9 is a block chart of the M-band wavelet inverse transformation unit 29.

A number of M down samplers 61 and a number of M filters 71 are located in the M-band wavelet inverse transformation unit 29. The down samplers 61 perform down sampling for M number of times. The down sampling are performed after the data, which are series-parallel converted data at the series-parallel conversion unit 11, are filtered at filters 71.

The parallel-series conversion unit 11 reorders the time sequence data in M units, and the reordered time sequence data are assigned to their respective carrier frequencies $f_0$, $f_1$,... and $f_{M-1}$.

The M-band wavelet inverse transformation unit 29 performs the M-band wavelet inverse transformation to the data reordered in parallel, and transforms the signal along the frequency axes to the signal of the data sequence along the time axis. The transformed signal turns out to be a signal having M-band (M-channel) carrier frequency, as illustrated in Fig.11.

Fig.10 is a block chart of M-band wavelet transformation unit 39.

A number of M up samplers 62 and a number of M filters 72 are located in the M-band wavelet transformation unit 39. The up sampler 62 perform the up sampling for M number of times. The up sampling are performed after the data, which are series-parallel converted data at the series-parallel conversion unit 21, are filtered at the filters 72.

The wavelet transformation will be described in a format of wavelet transformation matrix. Each line in the matrix corresponds to each subchannel of the discrete wavelet/multicarrier modulation. Also, this wavelet transformation matrix has a characteristic of the orthogonal function. Due to this characteristic, the orthogonality of the discrete wavelet multicarrier modulation are maintained even though if symbol wave shapes are overlapping in the time region.

In an ideal multicarrier system, the shape of frequency spectrum of each subchannel will be rectangular so that the neighboring spectrum will not overlap with one another. There is no need for a guard band between the subchannels.

The example of frequency spectrum of the modulation multicarrier e(t) for the previously described method is illustrated in Fig.12.

The frequency spectrum for the case of the wavelet transformation, the side robes are found to be lower than the main robe by 45dB, as shown in Fig.12. For the case of the Fourier transformation, the side robes are found to be lower by 13 dB only, as shown in Fig.6.

As apparent from comparing Fig.6 and Fig.12, the difference in amplitudes of the main side robe and the side robe of neighboring subchannels is large for the multicarrier of wavelet transformation than the multicarrier of a normal Fourier transformation. Thus, reception sensitivity will become larger for every side robe, as a result, the channel capacity and the transmission rate will improve.

Also, as opposed to the wave forms of Fourier transformation being (sin X)/X , the frequency spectrum of the discrete wavelet/multicarrier modulation is extremely close to the narrow-band spectrum which is ideal for the multicarrier system.

In the multicarrier system that has adopted the Fourier transformation, because the side robes are large, deterioration due to this is spread to most of the subchannels. The multicarrier of Fourier transformation in the present system, the number of subchannels deteriorated will be greater than 50 to 100 channels. Although this will depend on a noise level, in the wavelet transformation of the multicarrier system, the number of subchannels deteriorated is settled to about 5 channels.

For the case of using the wavelet transformation, the bandwidth of subchannel can be made narrower than the case of using the Fourier transformation such that the communication capacity is able to be increased further.

A transmission capacity ratios for CDMA method and TDMA method are ranging from 3:1 to 4:1, however, the transmission capacity ratio for the combined method of OFDM method and CDMA method, and TDMA method are estimated to range from 9:1 to 20:1 such that the transmission capacity will increase drastically.

The technique of the discrete orthogonal wavelet transformation in the present embodiment is a well-known technique. Also, the spread spectrum is conventionally a well-known technique. However, such system that has combined the spread spectrum and the multicarrier modulation which uses the discrete orthogonal wavelet transformation, to make use of each merit is a new one. This is the main characteristic of the present embodiment.

As illustrated in Figs.13 and 14, an information modulation unit 111a or an information demodulation unit 117a that uses QPSK, 16 QAM can also be installed.

Embodiment 3.

Fig.15 illustrates a configuration of a radio transmitter and a radio receiver implementing DMT method by using TDMA method, which is another embodiment of the present invention.

In this case, the modulation/demodulation methods being used is the multicarrier modulation/demodulation of DMT method, and this case has three subchannels as illustrated in the spectrum of Fig.16.

Fig.16 is excerpt from IEEE Journal on selected areas in communications, Vol.13. No.9, December 1995, entitled "Overlapped Discrete Multitone Modulation of High Speed Copper Wire Communications".

As apparent from comparison of this spectrum with a spectrum of Fig.36, within a permissive bandwidth of 0.22 to 0.28 w/2 $\pi$, for the spectrum of Fig.36, an intensity of energy in a peripheral part is equating to an intensity of a central part, such that an efficiency of frequency is higher for the conventional $\pi$/4 shift QPSK method. Owing to this, within the same frequency bandwidth where TDMA will be assigned, a transmission with even higher data rate is possible.

Fig.17 illustrates configurations of the radio transmitter and the radio receiver using TDMA method, which is another embodiment of the present invention.

Fig.18 illustrates a multicarrier de/modulation spectrum of DWMT method of the present embodiment. Fig.18 is excerpt from IEEE journal on selected areas in communications, Vol.13. No.9. December 1995, entitled "Overlapped Discrete Multitone Modulation for High Speed Copper Wire Communications".

As apparent from comparison of this spectrum with the spectrum of Fig.16, side robes of each one of the carriers are low, so that the interference between the carriers are low, therefore, a lot of carriers can be assigned to the same band, and in addition, disturbance wave outside the band region is low, therefore, this has a merit in arranging carriers up to the edges of the bandwidth. Due to this, DWMT method has a higher efficiency in frequency usage over the $\pi$/4 shift QPSK method or the DMT method, and for a frequency bandwidth where TDMA will be assigned, a higher data rate communication is possible more than the $\pi$/4 shift QPSK method or the DMT method.

Fig.19 illustrates configurations of the radio transmitter and the radio receiver of the present invention, using TDMA method.

In the radio apparatus, a limitation of leakage power to the neighboring channel is standardized in order to prevent an interference and a disturbance given to the neighboring channels.

In a multicarrier communication, a transmission bit rate of each subchannel is changed flexibly. In a case when the transmission bit rate of a subchannel is high, side robe levels of the subchannel becomes high. Due to this, subchannels in the peripheral part for which the leakage power to the neighboring channel is limited, the side robe levels are lowered by lowering the bit rate. On the other hand, the subchannel at the central part is set to high bit rate since the limitation of the leakage power to the neighboring channels is not as restrictive.

Fig.20 illustrates power configuration of the subchannels that are adjusted to the limitation of leakage powers of the neighboring channels of the present invention.

Fig.20 shows the spectrum when the transmission rates of subchannels at both edges are lowered to 2Kbps and when the transmission rate of subchannel at the center is set to 4Kbps.

Fig.20 shows that it is possible to suppress disturbance waves of the neighboring channels, owing to the side robes of subchannel 1 (ch1) and subchannel 3 (ch3) which are lower than the side robes of subchannel 2 (ch2).

In Fig 20, squared areas at the top left and right corners of the diagram indicate regions where the leakage powers of neighboring channels should not be present so that the interference and the disturbance are not given to the neighboring channels.

As Fig.20 shows, the side robes of subchannel 1 (ch1) and the side robes of subchannel 3 (ch3) are lowered due to low bit rates, and because of this the side robes have a lower leakage powers than the leakage power of the limited regions of the neighboring channels.

Fig.21 illustrates a data sequence when transmitting 8 bits of data at 1ms, or in other words, the transmission rate of 8Kbps.

The first 2 bits are assigned to the subchannel 1 (ch1), the next 4 bits are assigned to the subchannel 2 (ch2) and the last 2 bits are assigned to the subchannel 3 (ch3).

Fig.22 illustrates serial-parallel converter 11a.

A point of difference from Fig.3 is that the mapper 602a has two types of constellations 603 and 603a. The constellation 603 is same as the one illustrated in Fig.4. The constellation 603a is illustrated in Fig.23.

Using the two different constellations 603 and 603a, I and Q values are obtained. As such, by mapping, the transmission rate of subchannel 1 (ch1) is 2Kbps, and the transmission rate of subchannel 2 (ch2) is 4Kbps, and the transmission rate of subchannel 3 (ch3) is 2Kbps. That is, the bit rates are low for the transmission rates of subchannels in the peripheral part. Accordingly, the leakage powers to the neighboring channels are lowered.

As such, in lowering the transmission rates of the subchannels in the peripheral part, at the parallel-serial converter of the receiver side, by using the same two constellations as the ones used in mapping, demapping is performed correctly.

Case of lowering transmission powers of the subchannels in the peripheral part in order to limit the leakage powers to the neighboring channels is described next.

Fig.24 illustrates configuration of a serial-parallel converter 11b for the case of lowering the transmission powers.

A mapper 602b installs a constellation 603b for lowering the transmission power by 80%, as illustrated in Fig.25. Therefore, when an identical data sequence of Fig.26 is inputted as the data sequence illustrated in Fig.5, the I and Q values outputted to channel 1 and channel 3 will be lower by 20%. The I and Q values are proportional to the transmission power, therefore, the transmission powers of channel 1 and channel 3 are suppressed to 80%. Accordingly, the transmission powers of the subchannel in the peripheral part only is lowered, to not exceed the limitation of the leakage powers of the neighboring channels.

Accordingly, a higher transmission rate is implemented because an optimal subchannel arrangement is adjusted to the limitation of the frequency bandwidth.

Now, although not illustrated in the drawings, however, it is possible to lower the previously described transmission rates of the subchannels in the peripheral part and to lower the transmission powers of the subchannels in the peripheral part both at the same time.

The embodiments 1, 2 and 3 has described the case of CDMA method and TDMA method, however, FDMA method can be used in combination with the multicarrier modulation/demodulation. In other words, in the previously described embodiments, instead of CDMA method, TDMA method or FDMA method can be used, and instead of TDMA method, CDMA method or FDMA method can be used. Also, other multiple access methods can be used.

As described above, in order to implement the high transmission rate, the spectrum is spread uniformly to a limited frequency bandwidth by adopting the modulation/demodulation methods of DMT method or DWMT method, by assigning transmission rate of the subchannel adjusted to the limitation of leakage power of the neighboring channel and/or by optimizing the subchannel by arranging the transmission power arrangement.

Embodiment 4

The embodiment 4 of the present invention is described with reference to the drawings.

Fig.27 illustrates the configuration of digital communication system of embodiment 3 of the present invention.

The wavelet/multicarrier method is used in ADSL modems 1 and 2. At home, a radio apparatus 3 is connected after the channel filter 108.

Fig.28 illustrates the configuration of transmission frequency of the digital communication system of the embodiment 3 of the present invention.

By using the method of the present invention, the frequency is divided as illustrated in Fig.28. The telephone service divides the baseband frequency to up-channel frequency and down-channel frequency, and each channel performs the wavelet/multicarrier transmission. A number of up channels is N and a number of down channels is M (N<M). Reasons for using the multicarrier transmission is a relatively simple operation: to adjust the number of carriers responding to amount of transmission; to divide data to a plurality of terminals; and to assign the carriers to the wire and the radio terminals.

For example, the case illustrated in Fig.28 is when the radio communication is performed using subcarriers S1 and S2.

Figs.29 and 30 illustrate the configurations of receiver and transmitter of the radio apparatus 3 of embodiment 3 of the present invention.

An A/D converter 203 converts a down-channel multicarrier branched at a branching filter 108 into a digital. A carrier selective frequency converter 204 selects the subcarriers S1 and S2 from the down-channel multicarrier, and convert the selected subcarriers S1 and S2 to the baseband frequencies, as illustrated in Fig.28. Operation of the receiver of radio apparatus 3 afterwards is same as the previously described spread spectrum modulation, therefore, description is omitted here.

Likewise, the receiver of radio apparatus 3 shown in Fig.30 performs the same operation as the previously described spread spectrum demodulation. A carrier selective frequency converter 212 converts the frequency of demodulated baseband signal to the subcarriers S1 and S2 in the down-channel multicarrier, and outputs to D/A converter 211. Data carried by a subcarrier other than the subcarriers S1 and S2 is outputted from the ADSL modem 2 to the branching filter 108 at the same time as the outputting of the subcarriers S1 and S2.

Fig.31 illustrates configuration of the transmitter of the ADSL modem 2(or 1), and Fig.32 illustrates configuration of the receiver of the ADSL modem 2(or 1) of embodiment 3 of the present invention.

The transmitter of ADSL modem 2 performs previously described wavelet inverse transformation, and the result is up-converted by a modulator 58 using a frequency transmitted from an oscillator 56. On contrary, the receiver of ADSL modem 2 inputs frequency transmitted from an oscillator 57 and a down conversion is performed by a demodulator 59. After that, the wavelet transformation is performed to output a digital information. The wavelet transformation of the receiver performs the wavelet transformation of N(N<M) bands. This is because the N number of up channels is smaller than the M number of down channels.

In the digital information inputted to the ADSL modem 2 as illustrated in Fig.31, wire data and radio data must be arranged in a pre-determined order. That is, to which band of the M bands the wire band and the radio band will be assigned must be decided to perform the M-band wavelet reverse transformation. As a result of the M-band wavelet reverse transformation, the radio data inputted to the pre-determined radio data band are assigned to the subcarriers S1 and S2. Also, for a case illustrated in Fig.32, the digital data outputted from the ADSL modem after the wire data and the radio data are arranged in the pre-determined order.

Under this method (wavelet multicarrier method), the wire communication uses the ADSL modem illustrated in Figs.31 and 32 to perform the data communication by modulation and demodulation of the data. The wavelet transformation is used in this case, and therefore, an efficiency of frequency usage is higher than a simple multicarrier method.

In a case of the radio communication, the subcarriers corresponding to a required amount of data in the radio communication are selected, and the signal is converted to baseband corresponding to spreading modulation shown in Figs.29 and 30, then the spreading modulation is applied, and then the signal is transmitted for the radio connection. Due to this, the radio signal becomes a signal of CDMA method using multicarrier of the wavelet transformation, so that the large capacity of data communication is possible with high frequency efficiency. Also, the data conversion from the wire data to the radio data is performed by carrier selection such that the interface is extremely simple and its circuit can also be simplified. Receiving is operated in a reversed manner for both wire and radio communication.

As described, in the present embodiment, in the wire type high speed data communication network the radio apparatus is provided for transmitting/receiving radio data to/from the terminal, and for transmitting/receiving radio data to/from a mobile terminal. The wire type high speed data communication adopts the wavelet multicarrier modulation/demodulation methods, and the radio communication adopts CDMA method by using the wavelet multicarrier.

According to the present embodiment, without having to demodulate the wavelet multicarrier signal of the wire type high speed data communication, that is, without having to convert to the information data, the carrier assigned to the radio communication is selected, and a spreading modulation is applied.

The transmitter and the receiver of the radio apparatus 3 illustrated in Figs.29 and 30 is the case of adopting modulation/demodulation of CDMA method, however, modulation/demodulation of other access methods such as TDMA method or FDMA method can be adopted.

Figs.31 and 32 illustrates the case of when the ADSL modem adopts the wavelet multicarrier method, however, the OFDM multicarrier method using the Fourier transformation can also be adopted.

Industrial Applicability

As described, according to the present invention, by making an information modulation to the multicarrier modulation, at the stage immediately after the information modulation, the frequency efficiency is raised, and furthermore, high performance against the resistance against fading and multipath in addition to the resistance against disturbance and interference are possible. This merit is obtained from a fact that the frequency spectrum is spread, similar to the characteristic of CDMA method. And further, by modulating using the multiple access methods, it is possible to further intensify the performances stated above.

Also, according to the present invention, by using the orthogonal wavelet transformation as the multicarrier modulation, the communication capacity is increased further, and an extremely strong communication system is implemented.

Further, according to the present invention, by using the wavelet multicarrier methods for the wire communication, and by using the wavelet multicarrier multiple access method for the radio communication, both the wire communication and the radio communication can deal with highly efficient larger capacity communication, in addition, can flexibly deal with charges in the amount of information.

Furthermore, according to the present invention, conversion from the wire communication and the radio communication is performed by selecting the carrier, therefore, the circuit configuration is being made extremely simple.

Claims

1.   A transmitter, comprising:

a multicarrier modulation unit for inputting a digital signal, performing a multicarrier modulation of an inputted signal, and outputting a modulated multicarrier signal; and
a multiple access transmitting unit for inputting the modulated multicarrier signal, modulating the modulated multicarrier signal by using a multiple access method, and transmitting a modulated signal.

2.   The transmitter according to claim 1, wherein the multicarrier modulation unit performs the multicarrier modulation by using Orthogonal Frequency Division Multiplexing (OFDM) method.

3.   The transmitter according to claim 1, wherein the multicarrier modulation unit comprises a discrete multitone (DMT) modulation unit for performing Inverse Fourier Transformation.

4.   The transmitter according to claim 1, wherein the multicarrier modulation unit comprises a discrete wavelet multitone modulation unit for performing Discrete Wavelet Inverse Transformation.

5.   The transmitter according to claim 1, wherein the multiple access transmitting unit comprises a CDMA transmitting unit for inputting the modulated multicarrier signal, and for modulating the modulated multicarrier signal by using Code Division Multiple Access (CDMA) method.

6.   The transmitter according to claim 1, wherein the multiple access transmitting unit comprises a TDMA transmitting unit for inputting the modulated multicarrier signal, and for modulating the modulated multicarrier signal by using Time Division Multiple Access (TDMA) method.

7.   The transmitter according to claim 1, wherein the multiple access transmitting unit comprises FDMA transmitting unit for inputting the modulated multicarrier signal, and for modulating the modulated multicarrier signal by using Frequency Division Multiple Access (FDMA) method.

8.   The transmitter according to claim 1, wherein the multicarrier modulation unit generates subchannels having different data transmission rates based on positions of the subchannel configuring the multicarriers.

9.   The transmitter according to claim 1, wherein the multicarrier modulation unit generates subchannels having different powers based on the positions of the subchannels configuring the multicarriers.

10.  A receiver, comprising:

a multiple access demodulation unit for inputting the modulated signal, demodulating the modulated signal by using a multiple access method, and outputting a demodulated signal; and
a multicarrier demodulation unit for inputting the demodulated signal, performing a multicarrier demodulation of the demodulated signal by a multicarrier demodulation, and outputting a digital signal.

11.  The receiver according to claim 10, wherein the multicarrier demodulation unit performs multicarrier demodulation by using Orthogonal Frequency Division Multiplexing (OFDM) method.

12.  The receiver according to claim 10, wherein the multicarrier demodulation unit comprises a discrete multitone (DMT) demodulation unit for performing Fourier Transformation.

**13.** The receiver according to claim 10, wherein the multicarrier demodulation unit comprises a discrete wavelet multitone (DWMT) demodulation unit for performing Discrete Wavelet Transformation.

**14.** The receiver according to claim 10, wherein the multiple access demodulation unit comprises a CDMA receiving unit for inputting the modulated signal, and for demodulating the modulated signal by using Code Division Multiple Access (CDMA) method.

**15.** The receiver according to claim 10, wherein the multiple access demodulation unit comprises a TDMA receiving unit for inputting the modulated signal, and for demodulating the modulated signal by using Time Division Multiple Access (TDMA) method.

**16.** The receiver according to claim 10, wherein the multiple access demodulation unit comprises a FDMA receiving unit for inputting the modulated signal, and for demodulating the modulated signal by using Frequency Division Multiple Access (FDMA) method.

**17.** The receiver according to claim 10, wherein the multicarrier demodulation unit inputs and demodulates subchannels having different data transmission rates based on positions of the subchannels configuring the multicarriers.

**18.** The receriver according to claim 10, wherein the multicarrier demodulation unit inputs and demodulates subchannels having different powers based on positions of the subchannels configuring the multicarriers.

**19.** A transmitter, comprising:

a carrier selection unit for inputting a multicarrier signal where a wire data and a radio data are assigned to their respective pre-determined subcarriers, and selecting a subcarrier signal where the radio data is assigned from the multicarrier signal;
a modulation unit for inputting a selected subcarrier, modulating the selected subcarrier, and outputting a modulated signal; and
a transmitting unit for inputting the modulated signal and outputting the modulated signal as a radio signal.

**20.** The transmitter according to claim 19, wherein the multicarrier signal is input to an Asymmetric Digital Subscriber Line (ADSL) modem, and branched to the transmitter.

**21.** The transmitter according to claim 19, wherein the multicarrier signal is generated by the Discrete Orthogonal Wavelet Inverse Transforamtion.

**22.** A receiver, comprising:

a demodulation unit for receiving a radio signal, demodulating the radio signal, and outputting a demodulated signal; and
a frequency converter for inputting the demodulated signal, converting the demodulated signal to a subcarrier signal having a frequency of pre-assigned subcarriers, and outputting the subcarrier signal of a multicarrier signal.

**23.** The receiver according to claim 22, wherein the subcarrier signal is added to the multicarrier signal output from the ADSL modem.

**24.** The receiver according to claim 22, wherein the multicarrier signal is generated by the Discrete Orthogonal Wavelet Inverse Transformation.

**25.** A transmitting method, comprising:

a multicarrier modulation step including steps of inputting a digital signal, performing a multicarrier modulation, and outputting a modulated multicarrier signal; and
a multiple access modulation step including steps of inputting the modulated multicarrier signal, modulating the modulated multicarrier signal by using a multiple access method and outputting a modulating signal.

**26.** A receiving method, comprising:

a multiple access demodulation step including steps of inputting the modulated signal, demodulating the modulated signal by using a multiple access method, and outputting a demodulated signal; and
a multicarrier demodulation step including steps of inputting the demodulated signal, performing a multicarrier demodulation of the demodulated signal, and outputting a digital signal.

**27.** A transmitting method, comprising:

a carrier selection step including steps of inputting multicarrier signal where a wire data and a radio data are assigned to their respective predetermined subcarriers, and selecting a subcarrier signal where the radio data is assigned from the multicarrier signal;
a modulation step for inputting a selected subcarrier, modulating the selected subcarrier, and outputting a demodulated signal; and

a transmitting step for inputting the modulated signal and outputting the modulated signal as a radio signal.

28. A receiving method, comprising:

a demodulation step including steps of receiving radio signal, demodulating the radio signal, and outputting a demodulated signal; and

a frequency conversion step including steps of inputting the demodulated signal, converting the demodulated signal to a subcarrier signal having a frequency of pre-assigned subcarriers, and outputting the subcarrier signal of a multicarrier signal.

# Fig.1

EP 0 944 197 A1

# Fig.2

# Fig.3

EP 0 944 197 A1

# Fig. 4

# Fig. 5

# Fig.6

EP 0 944 197 A1

# Fig.7

MULTICARRIER MODULATION UNIT — 390

CDMA TRANSMITTING UNIT — 314

DWMT MODULATION UNIT — 90

SPREADING MODULATION UNIT — 14

$d(t)$ — 10

INFO.

SERIAL-PARALLEL CONVERTER — 11

M-BAND WAVELET INVERSE TRANSFORMATION UNIT — 29

PARALLEL-SERIAL CONVERTER — 13

D/A — 51

LPF — 52

$e(t)$

$m(t)$

FREQ. CONVERTER — 15

$g(t)$ — 17

SPREADING CODE GENERATOR

fPN — 16

EP 0 944 197 A1

# Fig.8

# Fig.9

# Fig.10

# Fig.11

# Fig.12

## Fig.13

MULTICARRIER MODULATION UNIT — 390

CDMA TRANSMITTING UNIT — 314

DMT MODULATION UNIT — 90

d(t) — 10 — INFO. — QPSK OR 16QAM — 111a — SERIAL-PARALLEL CONVETER — 11 — IFFT — 12 — PARALLEL-SERIAL CONVETER — 13 — D/A — 51 — LPF — 52

SPREADING MODULATION UNIT — 14 — e(t) — m(t) — g(t) — FREQ. CONVERTER — 15

SPREADING CODE GENERATOR — 17 — 16 — fPN

EP 0 944 197 A1

# Fig.14

MULTICARRIER DEMODULATION UNIT — 391

CDMA RECEIVING UNIT — 322

DMT DEMODULATION UNIT — 91

SPREADING DEMODULATION UNIT — 22

INFO. — 18
$d(t)$

QPSK OR 16QAM — 117a

PARALLEL-SERIAL CONVERTER — 19

IFFT — 20

SERIAL-PARALLEL CONVERTER — 21

A/D — 53

LPF — 54

$e(t)$   $m(t)$

FREQ. CONVERTER — 23

SPREADING CODE GENERATOR — 25
$g(t)$

SYNCHRONIZATION CONTROL CIRCUIT — 26

$fPN$ — 24

EP 0 944 197 A1

# Fig.15

TRANSMITTING DATA

MULTICARRIER MODULATION UNIT    390

DMT MODULATION UNIT

90

TDMA TRANSMITTING UNIT    414

TDMA RECEIVING UNIT    422

MULTICARRIER DEMODULATION UNIT    391

DMT DEMODULATION UNIT

91

RECEIVING DATA

# Fig.16

# Fig.17

EP 0 944 197 A1

TRANSMITTING DATA

MULTICARRIER MODULATION UNIT — 390

DMT MODULATION UNIT — 92

TDMA TRANSMITTING UNIT — 414

TDMA RECEIVING UNIT — 422

MULTICARRIER DEMODULATION UNIT — 391

DMT DEMODULATION UNIT — 93

RECEIVING DATA

# Fig.18

Fig.19

RECEIVING
DATA

391a — MULTICARRIER DEMODULATION UNIT

DMT DEMODULATION UNIT (LIMITATION OF LEAKAGE POWER)

91a

422 — TDMA RECEIVING UNIT

414 — TDMA TRANSMITTING UNIT

390a — MULTICARRIER MODULATION UNIT

DMT MODULATION UNIT (LIMITATION OF LEAKAGE POWER)

90a

TRANSMITTING
DATA

# Fig.20

EXAMPLE OF
LEAKAGE
POWER
LIMITATION
VALUE FOR
NEIGHBORING
CHANNEL

# Fig.21

# Fig.22

# Fig.23

# Fig.24

PARALLEL-SERIAL CONVERTER    11b

IFFT    12

SWITCH    601a

MAPPER    602b

I = 0.8
Q= 0.8

0.8

603b

ch1

I = -0.5
Q= 1.0

1.0

603

ch2

I = 0.4
Q= 0.5

0.8

603b

ch3

EP 0 944 197 A1

34

# Fig.25

# Fig.26

# Fig.27

100 : TELEPHONE NETWORK

146 : TELEPHONE LINE (TWISTED PAIR CABLE)

EXCHENGER 101

103

VARIOUS SERVER 102

BRANCHING FILTER

ROUTER 104

ADSL MODEM WAVELET MULTICARRIER METHOD

106 : INTERNET

1

DATA MODEM 107

TERMINAL 140

108

BRANCHING FILTER

RADIO APPARATUS

ADSL MODEM WAVELET MULTICARRIER METHOD 2

TERMINAL 143

3

141 : TELEPHONE CENTER

142 : HOME

EP 0 944 197 A1

36

# Fig.28

UP-CHANNEL  DOWN-CHANNEL  S1  S2
MULTICARRIER  MULTICARRIER  CARRIER (SUBCARRIER)

AMPLITUDES

FREQ.

TELEPOHNE
SERVICE    (a)SIGNAL ON TELEPHONE LINE

S1  S2
CARRIER
SELECTION

AMPLITUDES

(b)CARRIER SELECTION FOR    FREQ.
CARRYING TO RADIO BAND    SPREAD SPECTIUM
MODULATION

( c ) FREQUENCY CONVERSION AND
SPREADING MODULATION

# Fig.29

BRANCHING FILTER _108_

$d(t)$

A/D _203_

CARRIER SELECTIVE FREQ. CONVERTER _204_

D/A _51_

LPF _52_

$e(t)$

$m(t)$

$g(t)$

SPREADING CODE GENERATOR _17_

$fPN$ _16_

SPREADING DEMODULATION UNIT _14_

FREQ. CONVERTER _15_

CDMA RECEIVING UNIT _314_

ADSL MODEM WAVELET MULTICARRIER METHOD _2_

TERMINAL _143_

RADIO APPARATUS (TRANSMITTER) _3_

EP 0 944 197 A1

# Fig.30

BRANCHING FILTER

ADSL MODEM WAVELET MULTICARRIER METHOD

TERMINAL

RADIO APPARATUS (RECEIVER)

CDMA RECEIVING UNIT

SPREADING DEMODULATION UNIT

D/A

CARRIER SELECTIVE FREQ. CONVERTER

A/D

LPF

FREQ. CONVERTER

SPREADING CODE GENERATOR

SYNCHRONIZATION CONTROL CIRCUIT

$d(t)$  $e(t)$  $m(t)$  $g(t)$  $fPN$

108  211  212  53  54  22  23  322  2  143  25  26  24  3

EP 0 944 197 A1

# Fig.31

TRANSMIT TO TELEPOHN LINE VIA BRANCHING FILTER

$m(t)$

58

$e(t)$

VCO

56

LPF

52

D/A

51

13 PARALLEL-SERIAL CONVERTER

29 M-BAND WAVELET INVERSE TRANSFORMER

11 SERIAL-PARALLEL CONVERTER

10 INFO.

$d(t)$

2 : AIDSL MODEM (WAVELET MULTICARRIER METHOD) TRANSMITTER

# Fig.32

2 : ADSL MODEM (WAVELET MULTICARRIER METHOD) RECEIVER

EP 0 944 197 A1

# Fig.33

# Fig.34

# Fig.35

TRANSMITTING DATA

111

π/4 SHIFT QPSK INFO. MODULATION UNIT

514

TDMA TRANSMITTING UNIT

522

TDMA RECEIVING UNIT

117

π/4 SHIFT QPSK INFO. DEMODULATION UNIT

RECEIVING DATA

# Fig.36

# Fig.37

100 : TELEPHONE NETWORK

146 : TELEPHONE LINE (TWISTED PAIR CABLE)

EXCHENGER 101

VARIOUS SERVER 102

BRANCHING FILTER 103

106 : INTERNET

ROUTER 104

ADSL MODEM 105

DATA MODEM 107

TERMINAL 140

BRANCHING FILTER 108

ADSL MODEM 109

TERMINAL 143

141 : TELEPHONE CENTER

142 : HOME

EP 0 944 197 A1

# Fig.38

AMPLITUDE

UP-CHANNEL MULTICARRIE

DOWN-CHANNEL MULTICARRIER

CARRIER (SUBCARRIER)

TELEPOHNE SERVICE

FREQ.

## INTERNATIONAL SEARCH REPORT

| | International application No. |
|---|---|
| | PCT/JP98/01710 |

**A. CLASSIFICATION OF SUBJECT MATTER**
Int.Cl$^6$ H04J11/00, H04J13/00

According to International Patent Classification (IPC) or to both national classification and IPC

**B. FIELDS SEARCHED**

Minimum documentation searched (classification system followed by classification symbols)
Int.Cl$^6$ H04J11/00, H04J13/00

Documentation searched other than minimum documentation to the extent that such documents are included in the fields searched
Jitsuyo Shinan Koho (Y1, Y2)    1926-1998    Toroku Jitsuyo Shinan Koho (U)    1994-1998
Kokai Jitsuyo Shinan Koho (U)    1971-1998    Jitsuyo Shinan Toroku Koho (Y2)    1996-1998

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP, 4-309028, A (Nippon Hoso Kyokai), October 30, 1992 (30. 10. 92), Fig. 1 (Family: none) | 1, 6, 7, 19, 25, 27 |
| X | JP, 4-341027, A (Fujitsu Ltd.), November 27, 1992 (27. 11. 92), Fig. 7 (Family: none) | 10, 15, 16, 22, 26, 28 |
| A | JP, 9-051328, A (Sansei Denshi K.K.), February 18, 1997 (18. 02. 97), Fig. 4 & KR, 97-004285, A | 1-28 |

☐ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | | |
| "O" | document referring to an oral disclosure, use, exhibition or other means | "Y" | document of particular relevance; the claimed invention cannot be considered to involve an inventive step when the document is combined with one or more other such documents, such combination being obvious to a person skilled in the art |
| "P" | document published prior to the international filing date but later than the priority date claimed | "&" | document member of the same patent family |

| Date of the actual completion of the international search | Date of mailing of the international search report |
|---|---|
| July 7, 1998 (07. 07. 98) | July 21, 1998 (21. 07. 98) |

| Name and mailing address of the ISA/ | Authorized officer |
|---|---|
| Japanese Patent Office | |
| Facsimile No. | Telephone No. |

Form PCT/ISA/210 (second sheet) (July 1992)